(19) Europäisches Patentamt

European Patent Office

Office européen des brevets

(11) **EP 0 856 721 A1**

(12) **EUROPÄISCHE PATENTANMELDUNG**

(43) Veröffentlichungstag:
05.08.1998 Patentblatt 1998/32

(51) Int. Cl.⁶: **G01D 5/165**, G01D 5/245

(21) Anmeldenummer: 98100265.2

(22) Anmeldetag: 09.01.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 31.01.1997 DE 19703525

(71) Anmelder:
Walcher Messtechnik GmbH
79199 Kirchzarten (DE)

(72) Erfinder: Walcher, Hans
79199 Kirchzarten (DE)

(74) Vertreter:
RACKETTE Partnerschaft Patentanwälte
Postfach 13 10
79013 Freiburg (DE)

(54) **Vorrichtung zur Positionierung einer Welle**

(57) Bei einer Vorrichtung zur Positionierung einer Welle (1) mit einem Grobdrehwinkelgeber (11), einem Referenzsignalgeber (2), einem Feindrehwinkelgeber und einer Auswerteeinheit (15), mit der aus einem Grobdrehwinkelsignal in Abhängigkeit eines Referenzsignalwertes innerhalb eines einen Referenzsignalwertesprung einschließenden Drehwinkeltoleranzbereiches die tatsächliche Zahl an ganzen Umdrehungen und zusammen mit dem Feindrehwinkelsignal der Gesamtdrehwinkel bestimmbar ist, ist vorgesehen, daß die Welle (1) mit einem Schrittmotor (7) gekoppelt ist, daß mit einem Taktgenerator (5) dem Schrittmotor (7) zum Ausführen von Inkrementaldrehungen und dem Referenzsignalgeber (2) zugeführte Taktsignale (T) erzeugbar sind, daß ein Feinschrittzähler (20') zum Zählen von Taktsignalen (T) vorgesehen ist, daß das Referenzsignal (REF) aus einer logischen Verknüpfung in einer Logikeinheit aus Stellungssignalen von mit einer an die Welle (1) gekoppelten Segmentscheibe zusammenwirkenden Schaltmitteln und dem Taktsignal (T) gebildet ist, daß wenigstens bei ganzen Umdrehungen zugeordneten Referenzsignalwertesprüngen der Feinschrittzähler (20') auf einen Anfangsstartwert setzbar ist und daß mittels eines Verknüpfungsmoduls (20) aus dem Grobdrehwinkelsignal und den Referenzsignalwerten die Zahl der ganzen Umdrehungen bestimmbar ist.

Fig. 1

## Beschreibung

Die Erfindung betrifft eine Vorrichtung zur Positionierung einer Welle mit einem Grobdrehwinkelgeber, mit dem über mehrere Umdrehungen der Welle ein über einen Gesamtdrehwinkelbereich eindeutiges Grobdrehwinkelsignal erzeugbar ist, mit einem Referenzsignalgeber, mit dem bei jeder Umdrehung der Welle ein Referenzsignal mit wenigstens zwei jeweils einem Drehwinkelabschnitt zugeordneten Referenzsignalwerten erzeugbar ist, mit einem Feindrehwinkelgeber, mit dem ein über einen Teil einer ganzen Umdrehung eindeutiges Feindrehwinkelsignal erzeugbar ist, und mit einer über ein Verknüpfungsmodul verfügenden Auswerteeinheit, mit der aus dem Grobdrehwinkelsignal in Abhängigkeit des Referenzsignalwertes innerhalb eines einen Referenzsignalwertesprung einschließenden Drehwinkeltoleranzbereiches die tatsächliche Zahl an ganzen Umdrehungen und zusammen mit dem Feindrehwinkelsignal der Gesamtdrehwinkel bestimmbar ist.

Eine derartige Vorrichtung ist aus der DE 41 37 092 C2 bekannt. Bei dieser Vorrichtung ist als Grobdrehwinkelgeber ein mit der Welle gekoppeltes Potentiometer vorgesehen, das über eine Vielzahl von Umdrehungen einen analogen Spannungswert als Grobdrehwinkelsignal liefert. An der Welle ist eine Codescheibe angebracht, die über ein aus vier Spuren gebildetes Codemuster verfügt. Die Spuren weisen jeweils mit voneinander verschiedenen physikalischen Eigenschaften versehene Teilabschnitte auf, die über eine optische Abtasteinrichtung auslesbar sind. Das Potentiometer und die Welle mit der an ihr angebrachten Codescheibe sind über ein Übersetzungsgetriebe miteinander gekoppelt. Die gröbste Spur der Codescheibe mit zwei Teilabschnitten liefert mit den zugeordneten Teilen der Abtasteinrichtung als Referenzsignalgeber über eine volle Umdrehung der Welle ein Referenzsignal mit zwei jeweils einem Drehwinkelabschnitt zugeordneten Referenzsignalwerten. Die feiner unterteilten Spuren der Codescheibe sowie die zugeordneten Teile der Abtasteinrichtung als Feindrehwinkelgeber liefern über eine volle Umdrehung eindeutige Feindrehwinkelsignale.

Bei einem Übergang zwischen Teilabschnitten der Spur mit der gröbsten Teilung am Ende einer Halbumdrehung und einer Vollumdrehung ist eine durch das Referenzsignal induzierte Umschaltung zwischen durch maximal zulässige Spannungswerte gebildeten Toleranzfeldern durchgeführt, wobei sich die maximal zulässigen Spannungsbereiche benachbarter Toleranzfelder überlappen. Bei einem Wechsel zwischen Teilabschnitten am Ende einer Vollumdrehung zur nachfolgenden nächsten Umdrehung ist mit der Auswerteeinheit aus den abgespeicherten bder auch errechneten Spannungsbereichen und dem aktuellen Wert des Grobdrehwinkels die Zahl der tatsächlichen ganzen Umdrehungen der Welle sowie zusammen mit dem Feindrehwinkelsignal der Gesamtdrehwinkel der Welle bestimmbar.

Bei dieser Vorrichtung ist zwar unter Ausgleich von Nichtlinearitäten und Fehlern wie Getriebespiel oder Abtastfehler der Gesamtdrehwinkel mit einer durch die Anzahl der Spuren sowie deren Unterteilungsgrad festgelegten Auflösung bestimmbar. Allerdings ist der meßtechnische Aufwand zum Erzielen einer hohen Auflösung aufgrund der zunehmenden Anzahl von Spuren mit zugeordneten Abtastelementen der Abtasteinrichtung sowie deren Auswertung durch die Auswerteeinheit sehr hoch.

Aus der DE 195 13 692 C1 ist eine als Drehwinkelmeßsystem bezeichnete Vorrichtung bekannt, mit der die absolute Winkelposition eines für eine Anlaufphase richtig zu bestromenden Elektromotors bestimmbar ist. Das Drehwinkelmeßsystem verfügt über eine mit drei Spuren ausgestattete Scheibe, die mit der Welle des Elektromotors gekoppelt ist. Bei einer Abtastung liefert eine erste Spur eine hochauflösende inkrementale Winkelinformation in Form eines Sinus-Cosinus-Signalpaares mit einer hohen Anzahl von Perioden pro Umdrehung der Scheibe. Die Abtastung einer zweiten Spur liefert eine Sinus-Cosinus-Signalpaar mit einer einzigen Periode pro Umdrehung der Scheibe. Eine dritte Spur weist eine Indexmarke in einer vorgegebenen Winkelposition auf, deren Abmessung in Umfangsrichtung kleiner als die Periodenlänge des Signalpaares der ersten Spur ist. Zur Grobbestimmung einer absoluten Winkelposition vor Anlauf des Elektromotors wird über eine Auswerteeinheit das Sinus-Signal und das Cosinus-Signal der zweiten Spur mit einer Periode pro Umdrehung ausgewertet. Die Genauigkeit dieser absoluten Winkelposition ist zwar nicht sehr hoch, aber ausreichend, um die Motorwicklungen phasenrichtig für den Anlauf des Elektromotors zu bestromen. Anschließend wird mittels der Auswerteeinheit die erste Spur, die das Sinus-Cosinus-Signalpaar mit einer hohen Anzahl von Perioden pro Umdrehung aufweist, mit einer hohen Winkelauflösung ausgelesen. Mittels der Indexmarke der dritten Spur ist die aus der hochauflösenden ersten Spur ermittelte absolute Winkelposition auf den durch die vorbekannte Position der Indexmarke gegebenen Winkelwert korrigierbar. Mit diesem Drehwinkelmeßsystem ist zwar mittels der Indexmarke innerhalb einer Umdrehung der Welle deren Winkelposition mit hoher Genauigkeit relativ zu einer undefinierten anfänglichen Startumdrehungszahl absolut bestimmbar, allerdings ist eine absolute Angabe der Winkelposition über den gesamten, mehrere Umdrehungen umfassenden Gesamtdrehwinkelbereich nicht möglich.

Aus der DE 40 41 491 A1 ist ein Sensor zur Erzeugung von elektrischen Signalen, welche die Stellung eines Objektes wiedergeben, bekannt. Bei diesem Sensor sind Inkrementalgeber vorgesehen, die durch Abtastung von periodisch wiederkehrenden Markierungen Zählimpulse und eine Richtungsinformation erzeugen. Weiterhin verfügt dieser Sensor über Mittel zur Abtastung weiterer Markierungen, die bei Bewegung des Objektes serielle Signale erzeugen, welche eine Absolutwert der Stellung beinhalten. Dadurch ist in relativ geringen Abständen bei einer Relativbewegung zwischen Codebahnen einer Scheibe, die mit einer Welle als Objekt verbunden ist, in bezug auf ein Abtastelement ein Inkrementalzähler korrigierbar. Auch bei diesem Sensor ist jedoch keine Absolutmessung über einen mehrere volle Umdrehungen umfassenden Gesamtdrehwinkelbereich vorgesehen.

Aus der US-A-4,746,859 ist ein magnetischer Positionssensor für eine Welle bekannt, der durch analoge Kompensation des Einflusses der Umgebungstemperatur und der Versorgungsspannung verhältnismäßig präzise arbeitet. Der Positionssensor verfügt über eine drehfest mit einer Welle verbundenen Scheibe, bei der zum Erzeugen eines Synchronisationssignales eine radial ausgerichtete Kante ausgebildet ist, die eine Stufe in dem sich bezüglich des Abstands zum Mittelpunkt in einer Umlaufrichtung kontinuierlich ändernden Umfang der Scheibe bildet. Der Positionssensor verfügt weiterhin über zwei in einem Winkelabstand angeordnete Schaltelemente, mit denen nach Vorbeilauf der stufenartig ausgebildeten Kante innerhalb einer Umdrehung der Welle deren absolute Winkelposition bestimmbar ist.

Aus der DE 44 09 892 A1 ist ein Sensor zur Erfassung des Lenkwinkels eines Fahrzeuges bekannt, der eine erste Codescheibe und eine zweite Codescheibe aufweist. Die erste Codescheibe dreht sich mit der selben Geschwindigkeit wie ein Lenkrad des Fahrzeuges und wird mit einer Anzahl von Aufnehmern ausgelesen. Die zweite Codescheibe dreht sich mit einem Viertel der Geschwindigkeit der ersten Codescheibe und weist drei Codespuren auf, die mit zugeordneten Aufnehmern abgetastet werden. Durch Verknüpfung der somit erzeugten Feinsignale und Grobsignale ist eine eindeutige Bestimmung des Drehwinkels des Lenkrades unter Korrektur von mechanischen Toleranzen wie Getriebespiel und Fertigungstoleranzen über mehrere Vollumdrehungen in Abhängigkeit des Untersetzungsverhältnisses zwischen den beiden gekoppelten Codescheiben auch instantan unter Kompensation von mechanischen Toleranzen bestimmbar, ohne daß es eines an einer vorbekannten Winkelposition auftretenden Referenzsignales bedarf.

Aus der DE 39 07 442 A1 ist eine Vorrichtung zum Bestimmen des Drehwinkels einer Welle bekannt, die über Potentiometer als Grobdrehwinkelgeber und Feindrehwinkelgeber verfügen. Das als Grobdrehwinkelgeber dienende Potentiometer liefert über den Gesamtdrehwinkelbereich ein zu den Umdrehungen eindeutiges, mit steigender Umdrehungszahl zunehmendes Grobdrehwinkelsignal, während das als Feindrehwinkelgeber dienende Potentiometer während jeder Vollumdrehung mit zunehmendem Drehwinkel ein zunehmendes Feindrehwinkelsignal liefert. Durch rechnerische Verknüpfung des Grobdrehwinkelsignales und des Feindrehwinkelsignales ist der Gesamtdrehwinkel bestimmbar. Allerdings weist diese Vorrichtung den Nachteil auf, daß insbesondere in Sprungbereichen des Feindrehwinkelsignales erhebliche Meßfehler auftreten, da innerhalb eines sehr kleinen Umdrehungsabschnittes in einer steilen Flanke der gesamte Wertebereich des Feindrehwinkelsignales auftritt. Eine genaue Positionierung der Welle ist damit bei dieser Vorrichtung nicht möglich.

Der Erfindung liegt die Aufgabe zugrunde, eine Vorrichtung der eingangs genannten Art anzugeben, die bei einem verhältnismäßig einfachen, kostengünstigen Aufbau die absolute Bestimmung einer Winkelposition einer Welle innerhalb eines wenigstens mehrere Umdrehungen umfassenden Gesamtdrehwinkelbereiches gestattet.

Diese Aufgabe wird bei einer Vorrichtung der eingangs genannten Art erfindungsgemäß dadurch gelöst, daß die Welle mit einem Schrittmotor gekoppelt ist, daß mit einem Taktgenerator Taktsignale erzeugbar sind, die dem Schrittmotor zum Ausführen von Inkrementaldrehungen und dem Referenzsignalgeber zuführbar sind, daß ein Feinschrittzähler zum Zählen von Taktsignalen vorgesehen ist, daß das Referenzsignal aus einer logischen Verknüpfung in einer Logikeinheit aus Stellungssignalen von mit einer an die Welle gekoppelten Segmentscheibe zusammenwirkenden Schaltmitteln und dem Taktsignal gebildet ist, daß wenigstens bei ganzen Umdrehungen zugeordneten Referenzsignalwertesprüngen der Feinschrittzähler auf einen Anfangsstartwert setzbar ist und daß mittels des Verknüpfungsmoduls aus dem Grobdrehwinkelsignal und den Referenzsignalwerten die Zahl der ganzen Umdrehungen bestimmbar ist.

Dadurch, daß bei der erfindungsgemäßen Vorrichtung mit einem Taktgenerator erzeugte Taktsignale sowohl einem Schrittmotor zum Ausführen von Inkrementaldrehungen als einem ein Referenzsignal erzeugenden Referenzsignalgeber einspeisbar sind, wobei mit dem Referenzsignalgeber ein zur Kalibrierung eines Feinschrittzählers sowie zur Korrektur des Grobdrehwinkelsignales dienendes Referenzsignal aus dem Taktsignal und Stellungssignalen von mit einer an die Welle gekoppelten Segmentscheibe zusammenwirkenden Schaltmitteln gebildet ist, läßt sich die absolute Winkelposition der Welle über den gesamten Drehwinkelbereich eindeutig und präzise mit einem kostengünstigen Aufbau bestimmen, da sich über das Zählen der den kostengünstigen und leistungsfähigen Schrittmotor ansteuernden Taktsignale mit einem nach jeder vollen Umdrehung bei Auftreten eines Referenzsignalwertesprunges neben der Gesamtzahl der Umdrehungen der Welle über das korrigierte Groodrehwinkelsignal des Grobdrehwinkelgebers auch der Drehwinkel innerhalb einer vollen Umdrehung exakt bestimmen läßt. Durch die wiederholte Kalibrierung des Feinschrittzählers sind somit bei Schrittmotoren häufig auftretende Ungenauigkeiten infolge Überlastung oder unbeabsichtigtes Löschen eines zur Steuerung des Schrittmotors verwendeten Schrittzählers durch Ausschalten beziehungsweise Stromausfall oder auch durch manuelles Drehen der Welle eliminierbar, die mit der Genauigkeit des Grobdrehwinkelgebers insbesondere im Bereich von Wechseln einer durch eine Ordnungszahl charakterisierten Vollumdrehung der Welle nicht erfaßbar sind und unter Umständen zu einem Absolutfehler von bis zu einer vollen Umdrehung führen können.

Beispielsweise nach einem Stromausfall oder einem Anschalten der Vorrichtung zum Bestimmen der Position der Welle ist der Feinschrittzähler wenigstens auf einen Anfangsstartwert setzbar, der beispielsweise einer vollen Umdrehung entspricht oder Null ist. Der Zählerstand des Feinschrittzählers ist somit instantan ohne weitere Korrekturmaßnahmen maximal um eine ganze Umdrehung falsch. Dann wird der Schrittmotor so angesteuert, daß eine Drehung der Welle in Vorwärtsrichtung oder Rückwärtsrichtung mit einem einem Wechsel einer ganzen Umdrehungszahl zugeordneten Referenzsignalwertesprung des Referenzsignales erfolgt. Bei dem Auftreten eines beispielsweise durch einen Flankenrichtungsdetektor durch Verknüpfen eines Richtungssignales und des Referenzsignales detektierbaren, einem Wechsel der ganzen Umdrehungszahl zugeordneten Referenzsignalwertesprunges wird der Feinschrittzähler auf einen Anfangsstartwert von beispielsweise Null gesetzt. Nach dieser Korrektur ist die tatsächliche Position exakt ermittelt.

In einer zweckmäßigen Weiterbildung des Referenzsignalgebers ist vorgesehen, daß neben den bei Abschluß beziehungsweise Beginn ganzen Umdrehungen auftretenden Referenzsignalwertesprüngen jeweils einem Teilabschnitt einer Vollumdrehung zugeordnete Referenzsignalwertesprünge erzeugbar sind. Bei Setzen des Feinschrittzählers an diesen weiteren Referenzsignalwertesprüngen, die sich zweckmäßigerweise von den bei Vollumdrehungswechseln auftretenden Referenzsignalwertesprüngen in Abhängigkeit der Drehrichtung durch die Sprungrichtung zwischen Referenzsignalwerten unterscheiden, auf einen Zwischenstartwert ist eine weitere Verfeinerung der Kalibrierung geschaffen.

Es ist zweckmäßig, daß der Drehwinkeltoleranzbereich gleich oder kleiner als 180 Grad ist und dem Wechsel einer vollen Umdrehungszahl zugeordnete Referenzsignalwertesprünge mittig in bezug auf den Drehwinkeltoleranzbereich sowie zwischen Vollumdrehungszahlwechseln auftretende Referenzsignalwertesprünge mittig zwischen den dem Wechsel einer vollen Umdrehungszahl zugeordneten Referenzsignalwertesprüngen auftreten. Dadurch sind für jede Vollumdrehung zwei Kalibrierabgleiche geschaffen.

Bevorzugt ist der Taktgenerator des Feindrehwinkelgebers integraler Bestandteil einer Schrittmotoransteuerung, mit der Taktsignale zur Ansteuerung des Schrittmotors zum Drehen der Welle in Winkelschritten erzeugbar sind. Diese Taktsignale sind dem Feinschrittzähler unmittelbar einspeisbar, so daß eine sehr präzise direkte Positionierung der Welle geschaffen ist.

Weitere zweckmäßige Ausgestaltungen und Vorteile der Erfindung sind Gegenstand der Unteransprüche sowie der nachfolgenden Beschreibung von Ausführungsbeispielen unter Bezug auf die Figuren der Zeichnung. Es zeigen:

Fig. 1 in einem Blockschaltbild ein Ausführungsbeispiel einer Vorrichtung zum Bestimmen des Drehwinkels einer Welle mit einem Grobdrehwinkelgeber und einem Referenzsignalgeber,

Fig. 2 in einem Blockschaltbild ein erstes Ausführungsbeispiel eines Referenzsignalgebers,

Fig. 3 in einem Blockschaltbild ein zweites Ausführungsbeispiel eines Referenzsignalgebers und

Fig. 4 in einzelnen Schaubildern ein Grobdrehwinkelsignal, ein Referenzsignal und ein Ordnungszahlsignal jeweils in Abhängigkeit der Umdrehungszahl.

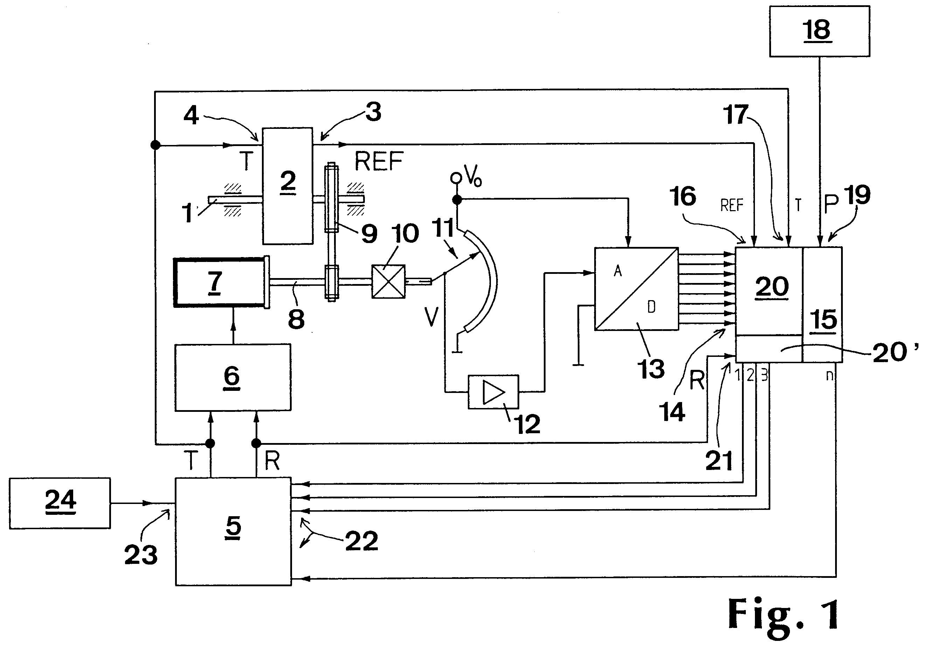

Fig. 1 zeigt in einem Blockschaltbild ein bevorzugtes Ausführungsbeispiel einer Vorrichtung zum Bestimmen des Drehwinkels einer Welle 1. Die beispielsweise durch eine Positionierspindel einer Werkstückbearbeitungseinrichtung gebildete Welle 1 ist mit einem Referenzsignalgeber 2 gekoppelt. Mit dem Referenzsignalgeber 2 ist bei jeder Umdrehung der Welle 1 ein an einem Referenzsignalausgang 3 anliegendes Referenzsignal REF erzeugbar, das zwei jeweils einem Drehwinkelabschnitt der Welle 1 zugeordnete Referenzsignalwerte annimmt.

Dem Referenzsignalgeber 2 ist über einen Taktsignaleingang 4 ein über eine Regeleinheit 5 generierbares Taktsignal T einspeisbar. Die Regeleinheit 5 steht weiterhin mit einer Ansteuereinheit 6 in Verbindung, wobei der Ansteuereinheit 6 neben dem Taktsignal T auch ein durch die Regeleinheit 5 generiertes Richtungssignal R einspeisbar ist.

Die Ansteuereinheit 6 ist an einen Schrittmotor 7 angeschlossen, dessen Schrittmotorwelle 8 bei jedem Taktsignal T um einen Inkrementalschritt drehbar ist, wobei die Drehrichtung der Schrittmotorwelle 8 durch das der Ansteuereinheit 6 durch die Regeleinheit 5 zugeführte Richtungssignal R festgelegt ist. Die Schrittmotorwelle 8 ist mit der Welle 1 über beispielsweise durch ein Zahnriemengetriebe gebildetes Wellengetriebe 9 gekoppelt.

Weiterhin steht die Schrittmotorwelle 8 über ein Gebergetriebe 10 mit einem als Analogwertgeber, insbesondere gemäß Fig. 1 als Potentiometer ausgebildeten Grobdrehwinkelgeber 11 in Verbindung. Das Gebergetriebe 10 ist zweckmäßigerweise als Untersetzungsgetriebe ausgeführt, wobei das Übersetzungsverhältnis so eingerichtet ist, daß der Arbeitsbereich des Grobdrehwinkelgebers 11 sowie der nutzbare Gesamtdrehwinkelbereich der Welle 1 aufeinander angepaßt sind. So ist beispielsweise bei Verwendung eines Potentiometers mit zehn Gängen und einem 200 Umdrehungen der Schrittmotorwelle 8 entsprechenden Gesamtdrehwinkelbereich eine Übersetzung von 20 : 1 vorgesehen.

Mit dem Grobdrehwinkelgeber 11 ist ein Grobdrehwinkelsignal erzeugbar, das über mehrere durch eine Ordnungszahl charakterisierbare Umdrehungen der Welle 1 über einen Gesamtdrehwinkelbereich eindeutig ist. Bei Verwendung eines als an eine Basisspannung $V_0$ gelegten Spannungsteiler geschalteten Potentiome-ters als Grobdrehwinkelgeber 11 ist das analoge Grobdrehwinkelsignal durch eine sich in Abhängigkeit der Drehstellung der Schrittmotorwelle 8 und damit des Drehwinkels der Welle 1 in charakteristischer Weise ändernde Spannung V gegeben.

Das in diesem Ausführungsbeispiel analoge Grobdrehwinkelsignal ist über einen Verstärker 12 einem Analog/Digital- (A/D-) Wandler 13 einspeisbar, mit dem das Grobdrehwinkelsignal beispielsweise in ein 8-bit-Digitalsignal umwandelbar ist.

Das digitale Grobdrehwinkelsignal ist einem Grobdrehwinkelsignaleingang 14 einer Auswerteeinheit 15 einspeisbar. Weiterhin sind in der Auswerteeinheit 15 über einen Referenzsignaleingang 16 das mit dem Referenzsignalgeber 2 erzeugbare Referenzsignal REF und über einen Taktsignaleingang 17 das von der Regeleinheit 5 generierbare Taktsignal T einspeisbar. Weiterhin ist an die Auswerteeinheit 15 ein Vollumdrehungswertgeber 18 angeschlossen, in dem ein einer vollen Umdrehung der Welle 1 entsprechender digitaler Vollumdrehungswert P des digitalen Grobdrehwinkelsignales abgespeichert ist. Der Vollumdrehungswert P ist der Auswerteeinheit 15 über einen Vollumdrehungswerteingang 19 einspeisbar.

Die Auswerteeinheit 15 verfügt über ein Verknüpfungsmodul 20, das bei dem in Fig. 1 dargestellten Ausführungsbeispiel als Recheneinheit ausgebildet ist.

Bei einem abgewandelten, nicht dargestellten Ausführungsbeispiels weist das Verknüpfungsmodul 20 einen Festwertspeicher mit einer Wertetabelle auf.

Weiterhin ist in die Auswerteeinheit 15 ein als Vorwärts/Rückwärts-Zähler ausgebildeter Feinschrittzähler 20' zum Zählen der über den Taktsignaleingang 17 zuführbaren Taktsignale T integriert.

Schließlich sind der Auswerteeinheit 15 über einen Richtungssignaleingang 21 die von der Regeleinheit 5 generierten Richtungssignale R einspeisbar, mit denen die Zählrichtung des Feinschrittzähler 20' steuerbar ist.

Durch beispielsweise bei der Ansteuerung des Schrittmotors 7 auftretende Fehler wie Überlastung oder unbeabsichtigtes Löschen eines zur Steuerung des Schrittmotors 7 verwendeten Schrittzählers, durch Ausschalten oder Stromausfall bder auch durch manu-elles Drehen der Welle 1 ergeben sich Positionierfehler, die mit der Genauigkeit des Grobdrehwinkelgebers 11 insbesondere im Bereich von Wechseln einer durch eine Ordnungszahl charakterisierten Vollumdrehung der Welle 1 nicht erfaßbar sind und unter Umständen zu einem Absolutfehler von bis zu einer vollen Umdrehung führen können.

Zur Korrektor dieser Fehler ist mit der Auswerteeinheit 15 aus den Grobdrehwinkelsignalen, den Referenzsignalwerten sowie dem Taktsignal T über das Verknüpfungsmodul 20 und den Feinschrittzähler 20' die Position der Welle 1 instantan auf eine halbe Umdrehung genau beziehungsweise bei einem Referenzsignalwertesprung aufgrund einer Drehung der Welle 1 um maximal eine ganze Umdrehung bei einem Drehwinkelabschnitt von 360 Grad auf eine Inkrementaldrehung genau bestimmbar.

Bei einer Ausgestaltung der Auswerteeinheit 15 mit einem eine Recheneinheit aufweisenden Verknüpfungsmodul 20 ist ein Divisionsglied vorgesehen, mit dem das Grobdrehwinkelsignal durch den Vollumdrehungswert P zum Erzeugen eines Divisionswertes teilbar ist. Der Vorkommawert des Divisionswertes ist als dem Grobdrehwinkelsignal zugeordnete ganze Umdrehungszahl einem Ganzzahlspeicher und der Nachkommawert bis zu einer vorbestimmten Kommastelle einem Restwertspeicher einspeicherbar.

Bei einem Grobdrehwinkelsignal innerhalb eines Anfangsbereiches einer Vollumdrehung und dem Ende der dieser Vollumdrehung vorangehenden Vollumdrehung entsprechenden ersten Referenzsignalwert L ist die dem Grobdrehwinkelsignal zugeordnete ganze Umdrehungszahl um eins erniedrigbar. Bei einem Grobdrehwinkelsignal innerhalb eines Endbereiches einer Vollumdrehung und einem dem Anfang der sich diese Vollumdrehung anschließenden nächsten Vollumdrehung entsprechenden zweiten Referenzsignalwert 0 ist die dem Grobdrehwinkelsignal zugeordnete ganze Umdrehungszahl um eins erhöhbar. Dadurch ist eine Korrektur der vollen Umdrehungszahl aufgrund der bei einer Vollumdrehung als Referenz auftretenden Referenzsignalsprünge geschaffen.

Diese Korrektur ist zweckmäßigerweise wie folgt durchgeführt. In der Recheneinheit des Verknüpfungsmoduls 20 sind die Nachkommawerte NK in einer Zuordnung zu den Referenzsignalwerten 0, L in einer Parametertabelle abgespeichert. Zu jeder Zuordnung von Referenzsignalwerten 0, L und Nachkommawerten NK ist in der Parametertabelle ein Korrekturwert KW abgelegt, um den bei Vorliegen der entsprechenden Kombination von Nachkommawerten NK und Referenzsignalwerten O, L der Vorkommawert durch Addition zu korrigieren ist. Anschaulich läßt sich eine derartige Parametertabelle wie folgt darstellen:

| NK | REF | KW |
|---|---|---|
| 0 ... x | L | -1 |

(fortgesetzt)

| NK | REF | KW |
|---|---|---|
| 0 ... x | 0 | 0 |
| x+ε ... 1-y+ε | 0, L | 0 |
| 1-y ... 1 | L | 0 |
| 1-y ... 1 | 0 | +1 |

In der Parametertabelle steht "x" für einen ersten Teilbereich und "y" für einen zweiten Teilbereich des Drehwinkeltoleranzbereiches, dessen Größe somit durch x+y gegeben ist. Es ist zweckmäßig, daß der Drehwinkeltoleranzbereich beidseitig des eingeschlossenen Referenzsignalwertsprunges mit gleichen Werten von x und y gleiche Teilbereiche aufweist. Die Bezeichnung "ε" steht für den in der vorbestimmten Genauigkeit kleinsten Nachkommawert, um die verschiedenen Bereiche von Nachkommawerten NK eindeutig voneinander zu trennen.

Bei einer Ausgestaltung der Auswerteeinheit 15 mit einem einen Festwertspeicher aufweisenden Verknüpfungsmodul 20 ist zur Bestimmung der tatsächlichen ganzen Umdrehungszahl der Wertebereich des Grobdrehwinkelsignales abschnittsweise über den Gesamtdrehwinkelbereich sowie zugeordnete Referenzsignalwerte 0, L abgespeichert. Mit dem Verknüpfungsmodul 20 ist jedem Wertepaar eines in einem Wertebereichabschnitt liegenden Grobdrehwinkelsignales und Referenzsignalwertes 0, L genau eine den tatsächlichen Umdrehungen zugeordnete ganze Zahl zuweisbar.

Bei einem speziellen Ausführungsbeispiel stellt sich die Wertetabelle im Bereich eines Wechsels von der ersten ganzen Umdrehung zu der zweiten ganzen Umdrehung wie folgt dar, wobei das Grobdrehwinkelsignal in Volt mit GW und die korrigierte ganze Umdrehungszahl mit GU bezeichnet sind:

| GW / V | REF | GU |
|---|---|---|
| 1,500 | 0, L | 1 |
| 1,625 | 0, L | 1 |
| 1,750 | 0 | 2 |
| 1,750 | L | 1 |
| 1,875 | 0 | 2 |
| 1,875 | L | 1 |
| 2,000 | 0 | 2 |
| 2,000 | L | 1 |
| 2,125 | 0 | 2 |
| 2,125 | L | 1 |

(fortgesetzt)

| GW / V | REF | GU |
|---|---|---|
| 2,250 | 0 | 2 |
| 2,250 | L | 1 |
| 2,375 | 0, L | 2 |
| 2,500 | 0, L | 2 |

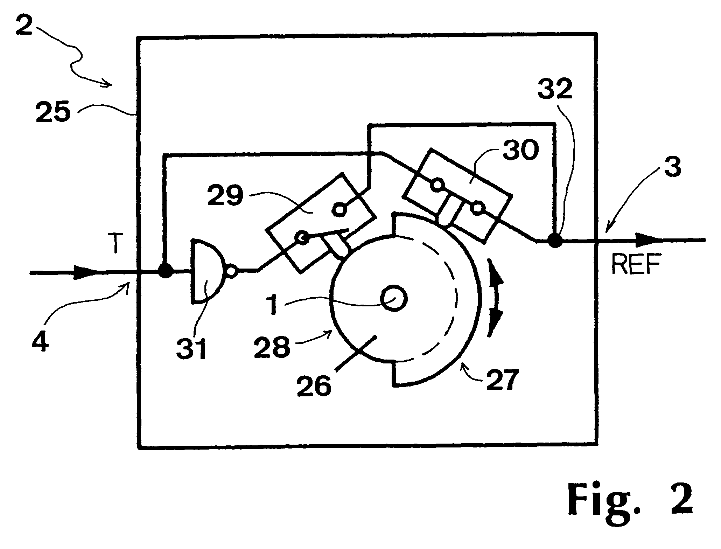

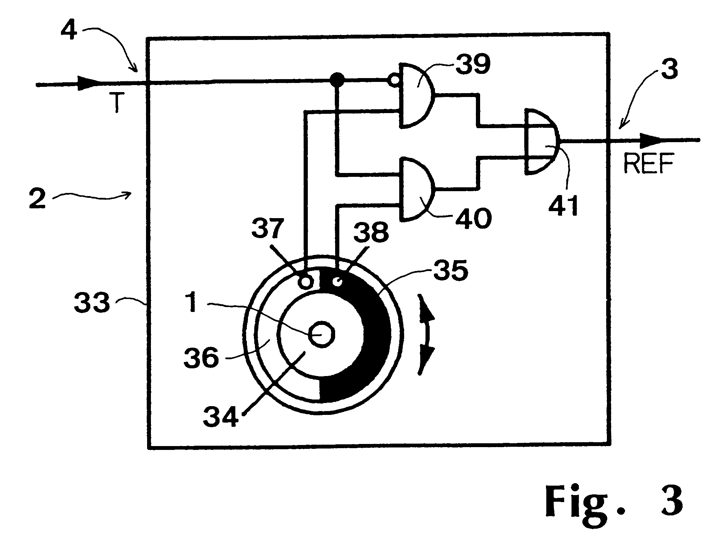

Zweckmäßigerweise ist der Referenzsignalgeber 2 beispielsweise wie nachfolgend anhand Fig. 2 oder Fig. 3 erläutert derart mit Schaltmitteln ausgebildet, daß sowohl bei einer vollen Umdrehung als auch bei einer Teilumdrehung von bevorzugt 180 Grad Referenzsignalwertesprünge auftreten. Beispielsweise nach einem Stromausfall oder einem Anschalten der Vorrichtung zum Bestimmen der Position der Welle 1 ist der Feinschrittzähler 20' bei einem Grobdrehwinkelsignalwert innerhalb des Drehwinkeltoleranzbereiches um den Abschluß einer ganze Umdrehung auf den Anfangsstartwert von beispielsweise Null und bei einem zwischen Drehwinkeltoleranzbereichen um aufeinanderfolgende abgeschlossene ganze Umdrehungen liegenden Grobdrehwinkelsignal auf einen vorzugsweise einer halben Umdrehung entsprechenden Zwischenstartwert setzbar. Der Zählerstand des Feinschrittzählers 20' ist somit instantan ohne weitere Korrekturmaßnahmen maximal um eine halbe Umdrehung falsch.

Dann wird der Schrittmotor 7 so angesteuert, daß eine Drehung der Welle 1 in Vorwärtsrichtung oder Rückwärtsrichtung mit einem Referenzsignalwertesprung des Referenzsignales REF durchgeführt ist. Bei dem Auftreten eines beispielsweise durch einen Flankenrichtungsdetektor durch Verknüpfen des Richtungssignales R und des Referenzsignales REF detektierbaren, einem Wechsel der ganzen Umdrehungszahl zugeordneten Referenzsignalwertesprunges ist der Feinschrittzähler 20' auf den Anfangsstartwert von beispielsweise Null und bei einem entsprechend detektierbaren, einer Teilumdrehung von beispielsweise einer halben Vollumdrehung zugeordneten Referenzsignalwertesprung auf den der Teilumdrehung entsprechenden Zwischenstartwert gesetzt. Nach dieser Korrektur ist die tatsächliche Position exakt ermittelt.

Der Regeleinheit 5 ist von der Auswerteeinheit 15 mit dem Feinschrittzähler 20' über eine entsprechende Anzahl von Busleitungen das korrigierte n-bit-Drehwinkelsignal einspeisbar, wobei die bit-Tiefe n dem vorbestimmten Winkelschritt der Welle 1 entspricht.

Das n-bit-Drehwinkelsignal setzt sich aus einer vollen Umdrehungen der Welle 1 entsprechenden ganzen Zahl und einer Winkelschritten der Welle 1 entsprechenden Feinschrittzahl zusammen, die durch den Feinschrittzähler 20' der Auswerteeinheit 15 zählbar ist.

Das n-bit-Drehwinkelsignal ist der Regeleinheit 5 über einen Drehwinkelsignaleingang 22 einspeisbar.

Weiterhin ist der Regeleinheit 5 über einen Sollwerteingang 23 der einem Sollwertgeber 24 beispielsweise über eine in Fig. 1 nicht dargestellte Tastatur einprogrammierbare Sollwert für wenigstens eine wenigstens einem Drehwinkel entsprechende Stellung der Welle 1 einspeisbar. Mit der Regeleinheit 5 sind eine Anzahl von Taktsignalen T und Richtungssignale R erzeugbar, um die Welle 1 von der durch das n-bit-Drehwinkelsignal repräsentierten aktuellen Stellung in die durch den Sollwert anzufahrende Stellung zu drehen.

Fig. 2 zeigt in einem Blockschaltbild eine Nockenschaltanordnung 25 als Ausführungsbeispiel für den Referenzsignalgeber 2 gemäß Fig. 1 zum Erzeugen des Referenzsignales REF mit wenigstens zwei jeweils einem Drehwinkelabschnitt der Welle 1 zugeordneten Referenzsignalwerten 0, L. Die Nockenschaltanordnung 25 verfügt über eine drehfest mit der Welle 1 verbundene Nockenscheibe 26 als Segmentscheibe, die in dem in Fig. 2 dargestellten Ausführungsbeispiel über einen sich über einen Drehwinkelabschnitt von 180 Grad erstreckenden ersten Segmentabschnitt 27 mit großem Außenradius und über einen sich ebenfalls über einen Drehwinkelabschnitt von 180 Grad erstreckenden zweiten Segmentabschnitt 28 mit verringertem Radius verfügt. Die Segmentabschnitte 27, 28 ergänzen sich zu einem Vollumdrehungswinkel von 360 Grad.

Weiterhin verfügt die Nockenschaltanordnung 25 als Schaltmittel über einen ersten Tastschalter 29 als Schaltelement und einen zweiten Tastschalter 30 als Schaltelement, die über an dem äußeren Umfang der Nockenscheibe 26 anliegende Taststifte verfügen. Bei Anliegen an dem ersten Segmentabschnitt 27 mit großem Außenradius sind die Tastschalter 29, 30 jeweils geschlossen. Bei Anliegen an dem zweiten Segmentabschnitt 28 mit gegenüber dem ersten Segmentabschnitt 27 geringeren Radius sind die Tastschalter 29, 30 jeweils geöffnet.

Dem ersten Tastschalter 29 ist das dem Taktsignaleingang 4 einspeisbare Taktsignal T über ein Invertierglied 31 an einen ersten Anschluß zuführbar. Dem zweiten Tastschalter 30 ist das Taktsignal T direkt an einen ersten Anschluß zuführbar. Die zweiten Anschlüsse der Tastschalter 29, 30 sind an einer Verbindungsstelle 32 elektrisch miteinander verbunden und an den Referenzsignalausgang 3 angeschlossen. Bei Drehen der Welle 1 sind somit die Tastschalter 29, 30 über einen der Erstreckung des ersten Segmentabschnittes 27 entsprechenden Teilwinkel geschlossen und über einen der Erstreckung des zweiten Segmentabschnittes 28 entsprechenden Teilwinkel geöffnet. In geschlossener Stellung der Tastschalter 29, 30 ist diesen ein logisches Stellungssignal "1" und entsprechend in geöffneter Stellung ein logisches Stellungssignal "0" zugeordnet. Zusammen mit dem an dem Taktsignaleingang 4 anliegenden Taktsignal T ist an dem Referenzsignalausgang 3 ein Referenzsignal REF gebildet, das durch die nachfolgende logische Verknüpfungsregel gegeben ist:

$$REF = (T \wedge A2) \vee (\underline{T} \wedge A1). \quad (1)$$

In der Beziehung (1) steht REF für das Referenzsignal, T für das Taktsignal, $\underline{T}$ für das invertierte Taktsignal T, A1 für das logische Stellungssignal des ersten Tastschalters 29 und A2 für das logische Stellungssignal des zweiten Tastschalters 30. Weiterhin sind die in der Schaltalgebra üblichen Symbole "$\wedge$" für die logische UND-Verknüpfung und das Symbol "$\vee$" für die logische ODER-Verknüpfung verwendet.

Zum Bilden des Referenzsignales REF gemäß Beziehung (1) sind die Taktschalter 29, 30 in einem ersten Winkelabstand $\alpha$ voneinander angeordnet, der einer halben Taktperiode des Taktsignales T entspricht, wobei einer Taktperiode ein Winkelschritt entspricht.

Alternativ sind die Tastschalter 29, 30 in einem zweiten Winkelabstand $\alpha'$ relativ zueinander positionierbar, wobei sich der zweite Winkelabstand $\alpha'$ aus einem der Erstreckung eines Segmentabschnittes 27, 28 entsprechenden Halbwinkel von in diesem Falle 180 Grad und dem ersten Winkelabstand $\alpha$ zusammensetzt. Bei einem zweiten Winkelabstand $\alpha'$ ist das Referenzsignal entweder nach der Beziehung

$$REF1 = (T \wedge \underline{A2}) \vee (\underline{T} \vee A1) \quad (2)$$

oder durch die Beziehung

$$REF2 = (T \wedge A2) \vee (\underline{T} \wedge \underline{A1}) \quad (3)$$

gebildet, wobei die Unterstreichungen als Invertierungen der unterstrichenen Signale T, A1, A2 zu verstehen sind. Die Referenzsignale REF1 und REF2 sind zueinander komplementär und entsprechen hinsichtlich der Lage der Referenzwertsprünge dem Referenzsignal REF gemäß Beziehung (1).

Fig. 3 zeigt in einem Blockschaltbild eine Optoschaltanordnung 33 als weiteres Ausführungsbeispiel des Referenzsignalgebers 2 gemäß Fig. 1. Die Optoschaltanordnung 33 verfügt über eine Codescheibe 34 als Segmentscheibe, die drehfest mit der Welle 1 verbunden ist. Die Codescheibe 34 weist einen sich über einen Halbwinkel von 180 Grad erstreckenden ersten Segmentabschnitt 35 auf, der beispielsweise lichtundurchlässig oder absorbierend ist. Komplementär zu dem ersten Segmentabschnitt 35 ist ein beispielsweise lichtdurchlässiger oder reflektierender zweiter Segmentabschnitt 36 vorgesehen, der den ersten Segmentabschnitt 35 zu einem Vollumdrehungswinkel von 360 Grad ergänzt.

Weiterhin verfügt die Optoschaltanordnung 33 als Schaltmittel über einen ersten Photodetektor 37 als Schaltelement und zweiten Photodetektor 38 als Schaltelement, die im Umfangsbereich der Segmentabschnitte 35, 36 angeordnet sind. Weiterhin verfügt die Optoschaltanordnung 33 über in Fig. 3 nicht dargestellte Lichtquelle, mit der die Codescheibe 34 mit Licht beaufschlagbar ist. In Abhängigkeit der Relativposition der in Transmission oder in Reflexion von Licht beaufschlagbaren Photodetektoren 37, 38 zu den Segmentabschnitten 35, 36 erzeugen diese einer logischen "1" oder einer logischen "0" entsprechende Stellungssignale A1, A2.

Das Stellungssignal A1 des ersten Photodetektors 37 ist an einen nichtinvertierenden Eingang eines ersten UND-Gliedes 39 angeschlossen. Einem invertierenden zweiten Eingang des ersten UND-Gliedes 39 ist das an dem Taktsignaleingang 4 anliegende Taktsignal T einspeisbar. Das Stellungssignal A2 des zweiten Photodetektors 38 ist zusammen mit dem Taktsignal T den nichtinvertierenden Eingängen eines zweiten UND-Gliedes 40 einspeisbar.

Die Ausgänge der UND-Glieder 39, 40 sind an die nichtinvertierenden Eingänge eines logischen ODER-Gliedes 41 gelegt. Das Ausgangssignal des ODER-Gliedes 41 ist dem Referenzsignalausgang 3 als Referenzsignal REF zuführbar.

Bei der in Fig. 3 dargestellten Optoschaltanordnung 33 weisen die Photodetektoren 37, 38 einen anhand der Nockenschaltanordnung 25 gemäß Fig. 2 erläuterten ersten Winkelabstand $\alpha$ auf, um das Referenzsignal REF gemäß Beziehung 1 zu erzeugen. Bei einer Anordnung der Photodetektoren 37, 38 in dem diesbezüglich ebenfalls wählbaren zweiten Winkelabstand $\alpha'$ ist eines der Stellungssignale A1, A2 eines Photodetektors 37, 38 zu invertieren, um die Referenzsignale REF1 gemäß der Beziehung (2) beziehungsweise REF2 gemäß der Beziehung (3) zu bilden.

Bei geringeren Anforderungen an die Genauigkeit ist es zweckmäßig, daß die Schaltmittel lediglich ein einzelnes Schaltelement zum Bilden des Referenzsignales REF aufweisen.

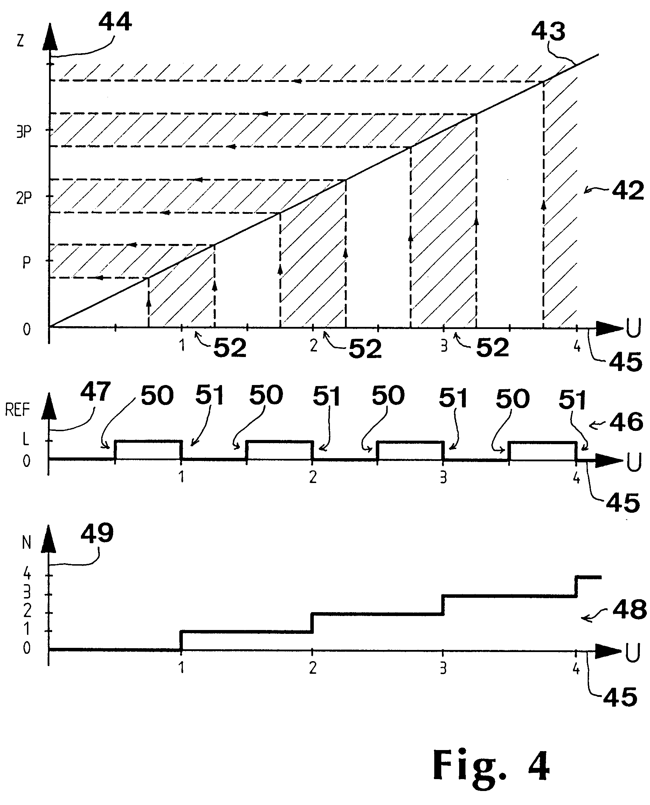

Fig. 4 zeigt zur Erläuterung der Funktionsweise der Vorrichtung zum Bestimmen des Drehwinkels der Welle 1 gemäß Fig. 1 ein erstes Schaubild 42, in dem Grobdrehwinkelsignalwerte 43 als Funktion des mit "Z" bezeichneten Grobdrehwinkelsignales auf der ersten Ordinate 44 gegen die mit "U" bezeichnete Umdrehungszahl auf der Abszisse 45 abgetragen ist.

In dem zweiten Schaubild 46 ist das beispielsweise gemäß Beziehung (1) gebildete Referenzsignal REF auf der zweiten Ordinaten 47 gegen die auf der Abszisse 45 abgetragene Umdrehungszahl U abgetragen.

Schließlich ist in einem dritten Schaubild 48 auf der dritten Ordinate 49 eine mit "N" bezeichnete Ordnungszahl gegen die auf der Abszisse 45 abgetragenen Umdrehungszahl U aufgetragen, wie sie sich als ganzzahliger Teil des mit der Auswerteeinheit 15 korrigierten Grobdrehwinkelsignales ergibt.

Die in dem ersten Schaubild 42 dargestellten Grobdrehwinkelwerte 43 liefern einen eindeutigen Zusammenhang zwischen Umdrehungszahlen U und Grobdrehwinkelsignalen Z. Bei einem idealerweise linearen Zusammenhang entsprechen ganze Umdrehungszahlen U ganzzahligen Vielfachen des in dem Vollumdrehungswertgeber 48 abgespeicherten Vollumdrehungswertes P als Grobdrehwinkelsignale Z. Allerdings treten beispielsweise durch Getriebespiel, nichtlineare Charakteristika des Grobdrehwinkelgebers 11 wenigstens in Teilabschnitten des Gesamtdrehwinkelbereiches Abweichungen von dem idealen linearen Zusammenhang auf, die insbesondere im Bereich von Ordnungszahlwechseln bei einer Ermittlung der Ordnungszahl N allein aus den Grobdrehwinkelsignalen Z zu einem Fehler von einer Ordnungszahl N gegenüber den tatsächlichen vollen Umdrehungen U führen kann.

Anhand des zweiten Schaubildes 46 ist ersichtlich, daß das Referenzsignal REF zwischen dem ersten Referenzsignalwert L und dem zweiten Referenzsignalwert 0 verläuft, wobei bei Umdrehungszahlen U mit Werten $(0,5 + n)$ mit n als natürlicher Zahl erste Referenzsignalwertesprünge 50 und bei Werten n mit n als natürlicher Zahl zweite Referenzsignalwertesprünge 51 auftreten, die beispielsweise durch die logische Verknüpfung gemäß Beziehung (1) des Taktsignales T und der Ausgangssignale A1, A2 der Tastschalter 29, 30 beziehungsweise der Photodetektoren 37, 38 generiert sind. Die ersten Referenzsignalwertesprünge 50 und die zweiten Referenzsignalwertesprünge 51 weisen jeweils untereinander gleichgerichtete Sprungrichtungen bei Drehen der Welle 1 in einer Richtung auf und sind mit Flankenrichtungsdetektoren diesbezüglich unterscheidbar.

Gemäß der in dem ersten Schaubild 42 und dem zweiten Schaubild 46 repräsentieren Zuordnung sind als für einen Ordnungszahlwechsel maßgebliche Referenzsignalwertesprünge die zweiten Referenzsignalwertesprünge 51 vorgesehen, um die sich beidseitig Teildrehbereiche mit beispielsweise einer Viertelumdrehung der Welle 1 entsprechenden Nachkommawerten anschließen, die zusammen die Drehwinkeltoleranzbereiche 52 bilden. Innerhalb dieser einzelnen Drehwinkeltoleranzbereiche 52 um ganze Umdrehungszahlen U ist beispielsweise wie in dem dritten Schaubild 48 dargestellt einem Grobdrehwinkelsignal Z die korrekte Ordnungszahl N zuweisbar.

Es versteht sich, daß der A/D-Wandler 13, die Auswerteeinheit 15 mit dem Verknüpfungsmodul 20 sowie dem Feinschrittzähler 20', der Vollumdrehungswertgeber 18 sowie die Regeleinheit 5 mit ihrem funktionalen Einheiten in einen in Verbindung mit der Schrittmotoransteuerung vorgesehenen Mikroprozessor integrierbar sind. Dadurch ergibt sich eine weitere in kostenmäßiger Hinsicht vorteilhafte Reduzierung von körperlichen Bauelementen.

**Patentansprüche**

1. Vorrichtung zur Positionierung einer Welle (1) mit einem Grobdrehwinkelgeber, mit dem über mehrere Umdrehungen der Welle (1) ein über einen Gesamtdrehwinkelbereich eindeutiges Groodrehwinkelsignal erzeugbar ist, mit einem Referenzsignalgeber, mit dem bei jeder Umdrehung der Welle (1) ein Referenzsignal mit wenigstens zwei jeweils einem Drehwinkelabschnitt zugeordneten Referenzsignalwerten erzeugbar ist, mit einem Feindrehwinkelgeber, mit dem ein über einen Teil einer ganzen Umdrehung eindeutiges Feindrehwinkelsignal erzeugbar ist, und mit einer über ein Verknüpfungsmodul verfügenden Auswerteeinheit, mit der aus dem Grobdrehwinkelsignal in Abhängigkeit des Referenzsignalwertes innerhalb eines einen Referenzsignalwertesprung einschließenden Drehwinkeltoleranzbereiches die tatsächliche Zahl an ganzen Umdrehungen und zusammen mit dem Feindrehwinkelsignal der Gesamtdrehwinkel bestimmbar ist, **dadurch gekennzeichnet**, daß die Welle (1) mit einem Schrittmotor (7) gekoppelt ist, daß mit einem Taktgenerator (5) Taktsignale (T) erzeugbar sind, die dem Schrittmotor (7) zum Ausführen von Inkrementaldrehungen und dem Referenzsignalgeber (2) zuführbar sind, daß ein Feinschrittzähler (20') zum Zählen von Taktsignalen (T) vorgesehen ist, daß das Referenzsignal (REF) aus einer logischen Verknüpfung in einer Logikeinheit aus Stellungssignalen (A1, A2) von mit einer an die Welle (1) gekoppelten Segmentscheibe (26, 34) zusammenwirkenden Schaltmitteln (29, 30; 37, 38) und dem Taktsignal (T) gebildet ist, daß wenigstens bei ganzen Umdrehungen zugeordneten Referenzsignalwertesprüngen (51) der Feinschrittzähler (20') auf einen Anfangsstartwert setzbar ist und daß mittels des Verknüpfungsmoduls (20) aus dem Groddrehwinkelsignal (Z) und den Referenzsignalwerten (O, L) die Zahl (N) der ganzen Umdrehungen bestimmbar ist.

2. Vorrichtung nach Anspruch 1, dadurch gekennzeichnet, daß bei einem Grobdrehwinkelsignal (Z) innerhalb eines Anfangsbereiches (x) einer Vollumdrehung und einem dem Ende der dieser Vollumdrehung vorangehenden Vollumdrehung entsprechenden Referenzsignalwert (L) die dem Groodrehwinkelsignal (Z) zugeordnete ganze Umdrehungszahl (U) um eins erniedrigbar ist und daß bei einem Grobdrehwinkelsignal (Z) innerhalb eines Endbereiches (y) einer Vollumdrehung und einem dem Anfang der sich an diese Vollumdrehung anschließenden nächsten Vollumdrehung entsprechenden Referenzsignalwert (0) die dem Groodrehwinkelsignal (Z) zugeordnete ganze Umdrehungszahl (U) um eins erhöhbar ist.

3. Vorrichtung nach Anspruch 2, dadurch gekennzeichnet, daß das Verknüpfungsmodul (20) eine Einheit aufweist, in der zu Zuordnungen von Grobdrehwinkelsignalen (Z) und Referenzsignalwerten (0, L) innerhalb von Grobdrehwinkelsignalabschnitten ganze Umdrehungszahlen abgespeichert sind.

4. Vorrichtung nach einem der Ansprüche 1 bis 3, dadurch gekennzeichnet, daß die Auswerteeinheit (15) mit einem Vollumdrehungswertgeber (18) in Verbindung steht, mit dem der Auswerteeinheit (15) ein einer vollen Umdrehung der Welle (1) entsprechender Vollumdrehungswert (P) des Grobdrehwinkelgebers (11) einspeisbar ist.

5. Vorrichtung nach Anspruch 4, dadurch gekennzeichnet, daß ein Divisionsglied vorgesehen ist, mit dem das Grobdrehwinkelsignal (Z) durch den Vollumdrehungswert (P) zum Erzeugen eines Divisionswertes dividierbar ist.

6. Vorrichtung nach Anspruch 5, dadurch gekennzeichnet, daß ein Ganzzahlspeicher und ein Restwertspeicher vorgesehen sind, wobei in dem Ganzzahlspeicher Vorkommawerte des Divisionswertes und in dem Restwertspeicher Nachkommawerte (NK) des Divisionswertes abspeicherbar sind.

7. Vorrichtung nach Anspruch 6, dadurch gekennzeichnet, daß das Verknüpfungsmodul (20) über eine Parametertabelle verfügt, in der in Abhängigkeit der in dem Restwertspeicher abgespeicherten Nachkommawerte (NK) und Referenzsignalwerten (0, L) ein Korrekturwert (KW) zur Korrektur des in dem Ganzzahlspeicher abgespeicherten Vorkommawertes abgelegt sind.

8. Vorrichtung nach einem der Ansprüche 1 bis 7, dadurch gekennzeichnet, daß mit dem Referenzsignalgeber (2) zusätzlich Teilumdrehungen der Welle (1) entsprechende weitere Referenzsignalwertesprünge (50) generierbar sind, an denen der Feinschrittzähler (20') auf einen Zwischenstartwert setzbar ist.

9. Vorrichtung nach Anspruch 8, dadurch gekennzeichnet, daß die Segmentscheibe (26, 34) zwei sich zu einem Vollumdrehungswinkel von 360 Grad ergänzende Segmentabschnitte (27, 28; 35, 36) aufweist.

10. Vorrichtung nach Anspruch 9, dadurch gekennzeichnet, daß jeder Segmentabschnitt (27, 28; 35, 36) sich über einen Halbwinkel von 180 Grad erstreckt.

11. Vorrichtung nach Anspruch 9 oder Anspruch 10, dadurch gekennzeichnet, daß als Schaltmittel zwei in einem Winkelabstand ($\alpha$, $\alpha'$) angeordnete Schaltelemente (29, 30; 37, 38) vorgesehen sind, mit denen zwei jeweils einem Segmentabschnitt (27, 28; 35, 36) zugeordnete Stellungssignale (A1, A2) erzeugbar sind.

**12.** Vorrichtung nach Anspruch 11, dadurch gekennzeichnet, daß der Winkelabstand ($\alpha$, $\alpha'$) gleich oder kleiner als die Hälfte einer einem Winkelschritt zugeordneten Periode des Taktsignales (T) modulo einer Winkelerstreckung eines Segmentabschnittes (27, 28; 35, 36) ist.

**13.** Vorrichtung nach einem der Ansprüche 1 bis 12, dadurch gekennzeichnet, daß der Drehwinkeltoleranzbereich (52) gleich oder kleiner als eine halbe Umdrehung der Welle (1) ist.

**14.** Vorrichtung nach einem der Ansprüche 1 bis 13, dadurch gekennzeichnet, daß die einer vollen Umdrehung der Welle (1) zugeordneten Referenzsignalwertesprünge (51) mittig in bezug auf die Drehwinkeltoleranzbereiche (52, x, y) vorgesehen sind.

**15.** Vorrichtung nach einem der Ansprüche 1 bis 14, dadurch gekennzeichnet, daß bei einem Wechsel der korrigierten Umdrehungszahl (N) der Feinschrittzähler (20') auf einen Wert Null setzbar ist.

**16.** Vorrichtung nach einem der Ansprüche 8 bis 15, dadurch gekennzeichnet, daß der Feinschrittzähler (20') bei einer Teilumdrehung durch einen außerhalb des Drehwinkeltoleranzbereiches (52, x, y) auftretenden Referenzsignalwertesprung (50) auf den Wert Null setzbar ist.

**17.** Vorrichtung nach einem der Ansprüche 1 bis 16, dadurch gekennzeichnet, daß der Feinschrittzähler (20') zu Beginn jenes Kalibriervorganges auf einen dem halben Vollumdrehungswert entsprechenden Zählerstand setzbar ist.

Fig. 1

EP 0 856 721 A1

Fig. 2

Fig. 3

Fig. 4

**Europäisches Patentamt**

# EUROPÄISCHER RECHERCHENBERICHT

Nummer der Anmeldung

EP 98 10 0265

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | DE 41 37 092 A (WALCHER MESSTECHNIK GMBH) 13.Mai 1993 * das ganze Dokument * | 1,2,9, 10,13,14 | G01D5/165 G01D5/245 |
| A | EP 0 300 183 A (BOSCH GMBH ROBERT) 25.Januar 1989 * Seite 3, Zeile 14 - Seite 4, Zeile 8; Abbildungen 1-3 * | 1-3,9 | |
| A | US 4 766 359 A (SMITH GEOFFREY M ET AL) 23.August 1988 * Zusammenfassung; Abbildung 1 * | 1,8,15 | |

| RECHERCHIERTE SACHGEBIETE (Int.Cl.6) |
|---|
| G01D |

Der vorliegende Recherchenbericht wurde für alle Patentansprüche erstellt

| Recherchenort | Abschlußdatum der Recherche | Prüfer |
|---|---|---|
| DEN HAAG | 28.April 1998 | Chapple, I |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument